# EUROPEAN PATENT APPLICATION

(11) **EP 1 672 636 A1**
(43) Date of publication of application: **21.06.2006**
(21) Application number: 04772968.6
(22) Date of filing: 07.09.2004
(51) Int. Cl.: G11B 27/00, G06F 12/00, H04N 1/21, H04N 5/76, H04N 5/91

(54) **FILE MANAGEMENT APPARATUS, FILE MANAGEMENT METHOD, PROGRAM OF FILE MANAGEMENT METHOD, AND RECORDING MEDIUM HAVING STORED THEREIN PROGRAM OF FILE MANAGEMENT METHOD**

(30) Priority: 09.10.2003 JP 2003350206
(71) Applicant: SONY CORPORATION, Tokyo 141-0001 (JP)
(72) Inventor: YOSHIDA, Haruo, c/o Sony Corporation, Tokyo 1410001 (JP); KASHIWAGI, Shigeru, c/o Sony Corporation, Tokyo 1410001 (JP); MURAKAMI, Masaharu, c/o Sony Corporation, Tokyo 1410001 (JP); JINNO, Hiroshi, c/o Sony Corporation, Tokyo 1410001 (JP); OHNO, Masayoshi, c/o Sony Corporation, Tokyo 1410001 (JP)
(74) Representative: Horner, David Richard
(86) International application number: PCT/JP2004/013286
(87) International publication number: WO 2005/036553

(57) **Abstract**

The present invention applies illustratively to an optical disk apparatus that handles an index file formed by a series of entries comprising extract information about files. In operation, the apparatus organizes a plurality of still picture files into a single movie file and registers anew the movie file into the index file.

## Description

### Technical Field

The present invention relates to a file managing apparatus, a file managing method, a file managing method program, and a recording medium that records the file managing method program. More particularly, the invention relates to an optical disk apparatus. What the invention proposes are arrangements whereby a plurality of still picture files registered in an index file having a series of entries each comprising file extract information are organized into a single movie file and are again registered in the index file, so that an inordinate increase in the number of entries is prevented even where numerous still picture files are to be managed.

### Background Art

Recent years have seen a number of optical apparatuses proposed for the recording of taken pictures to a randomly accessible recording medium of a large capacity such as optical disks.

Illustratively, Japanese Patent Laid-Open No. 2001-84705 discloses a method for allowing a disk apparatus to generate an index file from a large number of files recorded on a recording medium and to record the generated index file to the recording medium. The index file is arranged so as to improve the ease with which to handle the numerous files.

Japanese Patent Laid-Open No. 2002-278996 proposes a method for managing a large number of files hierarchically through the use of an index file so that the ease with which to handle the many files may be further enhanced.

The above-mentioned index files are designed illustratively to manage video content files. In such cases, property data is first generated from the attribute of the subject file to be managed. A series of entries each made up of such property data is organized into a property entry file. Thumbnail images are also generated from the files being managed. A series of thumbnail images is organized into a thumbnail image entry file. Each of the property entries comprises an index pointing to the corresponding thumbnail image entry. Where the file under management is a video content file, the thumbnail images recorded in the thumbnail image entry file are displayed in order to present the user with the numerous picture contents recorded on the recording medium. When the user selects any one of the thumbnails presenting the video contents, the corresponding video content is offered to the user on the basis of the recordings in the property entry file.

The still picture file is generally far smaller in data quantity than the movie file. It follows that the number of still picture files recorded on a single recording medium tends to be far larger than that of movie files. This leads to the problem of an inordinately large number of entries that are expected to be written to the index file.

Such huge increases in the entry count translate into greater quantities of data in the index file. That means it takes more time to handle the index file. It might then happen that the number of entries reaches the upper limit of the entry count for the index file or that the entry file, when the recording medium is loaded into another apparatus, becomes difficult to process depending on the application of the new apparatus. In such cases, it may become impossible to record desired files to the recording medium in a manner manageable by use of the index file despite the fact that the recording medium has a sufficiently wide free area.

### Disclosure of Invention

The present invention has been made in view of the above circumstances and provides a file managing apparatus, a file managing method, a file managing method program, and a recording medium that records the file managing method program whereby an inordinate increase in the number of entries is prevented when a large number of still picture files are to be managed.

In carrying out the present invention and according to one embodiment of the present invention, there is provided a file managing apparatus for managing files recorded on a recording medium; wherein the file managing apparatus reorganizes an index file recorded on the medium in such a manner that a plurality of still picture files recorded on the medium are grouped into a single movie file; and wherein the entries corresponding to the plurality of still picture files grouped into the movie file are deleted from the index file, while an entry comprising extract information about the movie file is registered into the index file.

As outlined above, the inventive file managing apparatus for managing files recorded on the recording medium reorganizes the index file also kept on the medium in such a manner that a plurality of still picture files recorded on the medium are put into a single movie file and that the entries representative of the plurality of still picture files thus grouped into the movie file are erased from the index file while an entry comprising extract information about the movie file is registered into the index file. Because multiple still picture files can be organized into a single movie file, the number of entries to be registered in the index file is that much reduced. This feature makes it possible to suppress an inordinate increase in the number of entries where numerous still picture files are to be managed.

According to another embodiment of the present invention, there is provided a file managing method for managing files recorded on a recording medium, the file managing method including the steps of: reorganizing an index file recorded on the medium in such a manner that a plurality of still picture files recorded on the medium are grouped into a single movie file; and deleting the entries corresponding to the plurality of still picture files grouped into the movie file from the index file, while registering an entry comprising extract information about the movie file into the index file.

The inventive file managing method outlined above makes it possible to suppress an inordinate increase in the number of entries in the index file where numerous still picture files are to be managed.

According to a further embodiment of the present invention, there is provided a file managing method program for causing a computer to execute a procedure for managing files recorded on a recording medium, the procedure including the steps of: reorganizing an index file recorded on the medium in such a manner that a plurality of still picture files recorded on the medium are grouped into a single movie file; and deleting the entries corresponding to the plurality of still picture files grouped into the movie file from the index file, while registering an entry comprising extract information about the movie file into the index file.

The inventive file managing method program outlined above also permits suppression of an inordinate increase in the number of entries where a large number of still picture files are to be managed.

According to an even further embodiment of the present invention, there is provided a recording medium which records a file managing method program for causing a computer to execute a procedure for managing files recorded on a recording medium, the procedure including the steps of: reorganizing an index file recorded on the medium in such a manner that a plurality of still picture files recorded on the medium are grouped into a single movie file; and deleting the entries corresponding to the plurality of still picture files grouped into the movie file from the index file, while registering an entry comprising extract information about the movie file into the index file.

The recording medium which records the file managing method program according to the invention also ensures prevention of an inordinate increase in the number of entries where lots of still picture files are to be managed.

As outlined above, the present invention provides arrangements for preventing the number of entries from growing inordinately where many still picture files need to be managed through the use of the index file.

### Brief Description of Drawings

Fig. 1 is a block diagram of an optical disk apparatus according to a first embodiment of the present invention.
Fig. 2 is schematic views showing how an index file is typically formed.
Fig. 3 is schematic views showing how the index file is typically reorganized.
Fig. 4 is a flowchart of the steps constituting a typical process of reorganizing the index file.
Fig. 5 is schematic views used to explain how the index file is reorganized by an optical disk apparatus according to a second embodiment of the present invention.

### Best Mode for Carrying out the Invention

Preferred embodiments of the present invention will now be described with reference to the accompanying drawings.

### (1) Structure of one embodiment

### (1-1) Structure of an optical disk apparatus

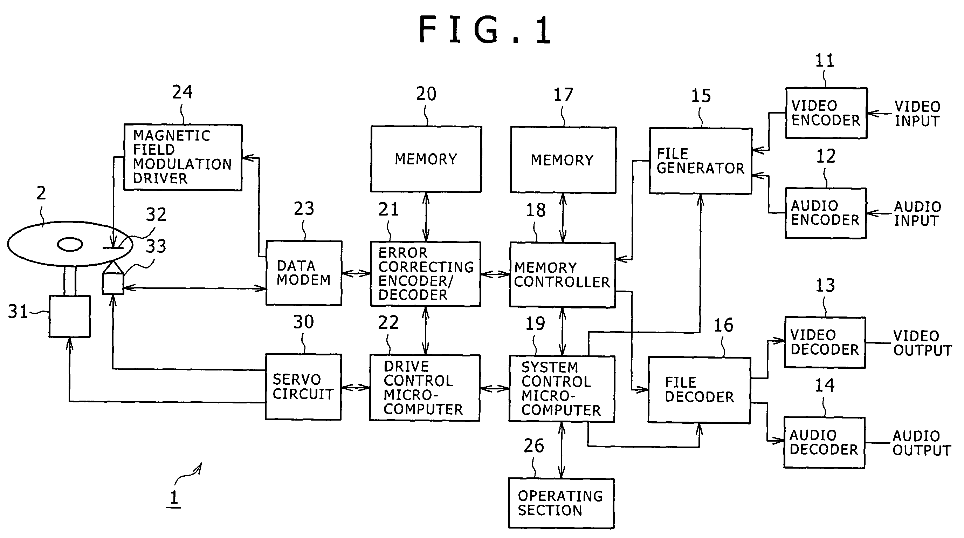

Fig. 1 is a block diagram of an optical disk apparatus according to the first embodiment of the present invention. Using imaging means and audio acquiring means, not shown, the optical disk apparatus 1 obtains a video and an audio signal, and records to an optical disk 2 the result of the imaging in the form of the acquired video and audio signals. The imaging result recorded on the optical disk 2 is reproduced and output by the optical disk apparatus 1 using a liquid crystal display panel as displaying means and speakers as audio outputting means. The imaging result may also be output to an external device. Under control of a system control microcomputer 19, the optical disk apparatus 1 acquires the imaging result as still pictures or movies together with audio signals. The imaging result as movies is compressed in MPEG (Moving Picture Experts Group) format and recorded to the optical disk 2 along with the accompanying audio signal in a predetermined file format. The imaging result as still pictures is compressed in JPEG (Joint Photographic Coding Experts Group) format and recorded to the optical disk 2 together with the audio signal in the appropriate file format. For this embodiment, the file format called the Quick Time (called the QT format hereinunder) is adopted.

In the optical disk apparatus 1, a video encoder 11 first subjects the video signal of the imaging result to analog-to-digital conversion so as to generate video data. The video encoder 11 then encodes the video data in MPEG or JPEG format and outputs the encoded data comprising the video data.

An audio encoder 12 first subjects the audio signal of the imaging result to analog-to-digital conversion in order to generate audio data. The audio encoder 12 then encodes the audio data and outputs the encoded data comprising the audio data.

Upon recording, a file generator 15 multiplexes the encoded data coming from the video encoder 11 and audio encoder 12 and outputs the multiplexed data under control of the system control microcomputer 19. A memory controller 18 switches its operations under control of the system control microcomputer 19. At the time of recording, the memory controller 18 successively records a data sequence output by the file generator 15 and various data output by the system control microcomputer 19 to a memory 17 for temporary storage. In keeping with the processing performed by an error correcting encoder/decoder 21 located downstream, the memory controller 18 allows the stored data to be output. Upon reproduction, conversely, the memory controller 18 keeps the data from the error correcting encoder/decoder 21 temporarily in storage prior to output to a file decoder 16 as well as to the system control microcomputer 19.

The error correcting encoder/decoder 21 switches its operations under control of the system control microcomputer 19. Upon recording, the error correcting encoder/decoder 21 temporarily stores the data output by the memory controller 18 into a memory 20 and supplements the stored data with error-correcting code. The error correcting encoder/decoder 21 then retrieves the data from the memory in a predetermined sequence and interleaves the retrieved data for output to a data modem 23. Upon reproduction, as opposed to the time of recording, the error correcting encoder/decoder 21 temporarily stores the data output by the data modem 23 into the memory 20 in a predetermined sequence prior to data output to the memory controller 18. During the process, the error correcting encoder/decoder 21 interleaves the data coming from the data modem 23 preparatory to data output. At the time of data output to the memory controller 18, the error correcting encoder/decoder 21 performs an error correcting process on the data using the error-correcting code added to the data during the recording.

The data modem 23 switches its operations under control of the system control microcomputer 19. Upon recording, the data modem 23 converts the data output by the error correcting encoder/decoder 21 into a serial data train before modulating the converted data for output to a magnetic field modulation driver 24 or to an optical pickup 33. At the time of reproduction, the data modem 23 reproduces a clock signal from a reproduction signal coming from the optical pickup 33 and, based on this clock signal, subjects the reproduction signal to binary discrimination and demodulation in order to acquire reproduction data corresponding to the serial data train generated during the recording. The data modem 33 outputs the reproduction data to the error correcting encoder/decoder 21.

Upon recording to a magneto-optical disk used as the optical disk 2, the magnetic field modulation driver 24 drives a magnetic head 32 in accordance with the signal output by the data modem 23. The magnetic head 32 is positioned in symmetrically opposed relation to the optical pickup 33 across the optical disk 2. In operation, the magnetic head 32 applies a modulated field reflecting the data output by the data modem 23 to the disk spot at which a laser beam is emitted by the optical pickup 33. By use of the thermomagnetic recording method, the optical disk apparatus 1 records imaging results and other data to the optical disk 2 if the optical disk 2 is a magneto-optical disk.

The optical disk 2 is a disk-type recording medium which, in this embodiment, is a magneto-optical (MO) disk, a phase change disk, or some other rewritable optical disk. A spindle motor 31 rotatively drives the optical disk 2 under control of a servo circuit 30 at a constant linear velocity (CLV), at a constant angular velocity (CAV) or at a zone constant linear velocity (ZCLV) depending on the optical disk 2.

The servo circuit 30 controls the spindle motor 31 in operation based on diverse signals output by the optical pickup 33 in order to execute a spindle controlling process. The servo circuit 30 also subjects the optical pickup 33 to tracking control and focus control, causes the optical pickup 33 and magnetic head 32 to do seeks, and performs processes such as a focus search.

A drive control microcomputer 22 controls the operations of the servo circuit 30 such as seeks under instructions from the system control microcomputer 19.

The optical pickup 33 emits the laser beam at the optical disk 2, gets its light-receiving element to receive reflected light, and processes the received reflection to generate and output various control signals. By keeping track of series of pits and marks formed on the optical disk 2, the optical pickup 33 outputs a reproduction signal whose signal level varies with the detected pit and mark sequences. The optical pickup 33 switches its operations under control of the system control microcomputer 19. During recording, with a magneto-optical disk used as the optical disk 2, the optical pickup 33 intermittently energizes the laser beam for emission at the optical disk 2. By this so-called pulse train method, the optical disk apparatus 1 records imaging results and other data to the optical disk 2. If the optical disk 2 is a phase change disk or the like, the optical pickup 33 raises the intensity of the laser beam aimed at the optical disk 2 from the level of reproduction to that of writing when recording imaging results and other data to the optical disk 2 through the thermomagnetic recording technique.

As described, the optical disk apparatus 1 compresses video and audio signals constituting the imaging result using the video encoder 11 and audio encoder 12, converts the compressed data into a QT movie file through the file generator 15, and forwards the converted file to the optical pickup 33 or to both the optical pickup 33 and the magnetic head 32 via the memory controller 18, error correcting encoder/decoder 21, and data modem 23. In turn, the optical pickup 33 alone or both the optical pickup 33 and the magnetic head 32 are arranged to record QT movie file data, index file data and others to the optical disk 2.

The optical disk apparatus 1 obtains reproduction data using the data modem 23 that processes the reproduction signal acquired by the optical pickup 33, and processes the reproduction data through the error correcting encoder/decoder 21 to reproduce the QT movie file, index file, etc., that were recorded on the optical disk 2. The QT movie file, index file and others thus reproduced are output from the memory controller 18.

The file decoder 16 inputs the QT movie file data output by the memory controller 18, divides the input data into video and audio data constituting encoded data, and outputs the resulting encoded data. A video decoder 13 decodes the encoded data comprising the video data and outputs the decoded data to the displaying means and external device, not shown. An audio decoder 14 expands the encoded data comprising the audio data coming from the file decoder 16 and outputs the expanded data to the audio outputting means and external device, not shown. These components of the optical disk apparatus 1 allow the imaging result reproduced from the optical disk 2 to be monitored.

The optical disk apparatus 1 has an interface that connects to external device such as a computer. Illustratively, the data output by a connected computer may be recorded to the optical disk 2 in place of imaging results, or files reproduced from the optical disk 2 may be processed by the computer.

An operating section 26 is made up of various controls, for the optical disk apparatus 1 and a touch panel mounted on the liquid crystal display panel. Operations performed by the user on the operating section 26 are signaled to the system control microcomputer 19.

The system control microcomputer 19 is a computer that provides overall control of the optical disk apparatus 1. An optical disk 2 getting loaded into the apparatus is detected by the system control microcomputer 19 executing a suitable processing program held in a memory, not shown. When the optical disk 2 is detected, the system control microcomputer 19 causes the optical pickup 33 to seek to the innermost zone of the optical disk 2 in order to reproduce management information from there for use by a file management system for the optical disk 2. The system control microcomputer 19 proceeds to acquire the reproduced management information through the memory controller 18 and store the acquired information into an internal memory. The information thus acquired allows the system control microcomputer 19 to detect the addresses of the files recorded on the optical disk 2 as well as free disk areas.

The processing program of the system control microcomputer 19 is offered preinstalled. Alternatively, the processing program may be installed after getting downloaded over a network or after being reproduced from a suitable recording medium. The recording medium carrying the processing program may be any one of optical disks, magnetic tapes, memory cards, and other storage media.

A searching by the system control microcomputer 19 through the management information thus obtained may reveal the presence of an index file recorded on the optical disk 2. In that case, the system control microcomputer 19 causes the optical pickup 33 to seek to the location where the index file is recorded on the optical disk and reproduce the index file. The system control microcomputer 19 proceeds to acquire the reproduced index file from memory controller 18 and record it to the internal memory for storage. By use of the index file, this embodiment enhances the overall usability of the files recorded on the optical disk 2.

More specifically, the system control microcomputer 19 in response to the user's operation presents the QT movie files recorded on the optical disk 2 illustratively by displaying thumbnail images on the monitor-use liquid crystal display panel based on the index file. When the user selects any one of the presented files, the system control microcomputer 19 accepts the user's selection and controls performance of the entire apparatus so as to reproduce the user-selected file. In this manner, the optical disk apparatus 1 offers the user the imaging results made up of the recorded movies and still pictures along with the accompanying audio signals.

Given the user's instruction to record imaging results, the system control microcomputer 19 finds out a free area on the optical disk 2 based on the management information, and causes the optical pickup 33 to seek to the detected free area and to record the successively acquired imaging results to that area on the optical disk 2. In keeping with the QT movie file modifications reflecting the imaging results being recorded, the system control microcomputer 19 updates the management information in the memory. When the optical disk 2 is about to be unloaded from the apparatus, the system control microcomputer 19 updates the management information on the optical disk 2 according to the management information updated in the memory. Specifically, the management information on the optical disk 2 is updated by outputting the updated management information from the memory to the error correcting encoder/decoder 21 through the memory controller 18.

During the above process, the system control microcomputer 19 outputs to the file generator 15 various kinds of information necessary for generating the QT files to be recorded. Furthermore, the system control microcomputer 19 acquires via the file generator 15 the information necessary for generating the index file and, using the acquired information and the information output earlier to the file generator 15, updates the index file held in the memory with regard to the QT movie files or other data to be recorded anew to the optical disk 2. As in the case of the update of management information, the system control microcomputer 19 updates the index file recorded on the optical disk 2 through the use of the index file updated and kept in the memory.

Given the user's instruction to edit a file recorded on the optical disk 2, the system control microcomputer 19 updates the index file and management information held in the memory in keeping with the editing work on the file as in the case of recording. In accordance with the index file and management information in the memory, the system control microcomputer 19 updates the index file and management information on the optical disk 2.

The optical disk apparatus 1 records the video and audio signals of imaging results to the optical disk 2 as outlined above, and records a QT movie file in an external reference format. More specifically, the optical disk apparatus 1 records a video and an audio file, based on video and audio signals respectively, to the optical disk 2, records a resource file for managing these video and audio files to the optical disk 2, and records a QT movie file composed of the video file, audio file, and resource file to the optical disk 2.

### (1-2) Index file

As with various files such as QT movie files recorded on the optical disk 2, the index file is a file by which the file management system for the optical disk 2 manages information necessary for reproduction such as the addresses of recording locations, file names, and file lengths. The index file comprises illustratively information for presenting the content of the QT movie files recorded on the optical disk 2 and subject to management. The optical disk apparatus 1 using the index file permits selection of any one of the QT movie files recorded on the optical disk 2 and reproduces the selected file from the optical disk 2 based on the file management system. In this manner, even where numerous QT movie files are recorded on the optical disk 2, the optical disk apparatus 1 allows the user to select any desired file quickly and accurately and thereby boosts the usability of the files recorded on the optical disk 2.

With this embodiment, the index file is formed by a series of entries comprising blocks of extract information about QT movie files in association with information for presenting the content of these files. The index file with its extract information blocks makes it possible to grasp the content of each QT movie file easily and quickly.

In the index file, the data made up of the extract information is divided by attribute into groups in the same file structure as that of QT movie files recorded on the optical disk 2. That is, the index file is formed and processed by taking advantage of the existing arrangements of the optical disk apparatus 1 for generating QT movie files. In this respect, the optical disk apparatus 1 can be structured simply in dealing with the index file.

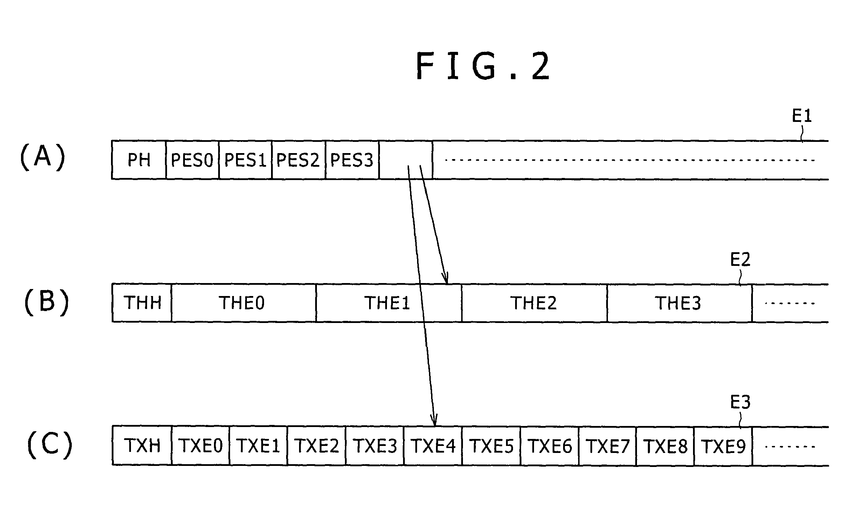

More specifically, as shown in Fig. 2, the index file is arranged to correspond structurally with QT movie files. In the index file, the extract information representative of real data is grouped into a text entry file E3, a thumbnail image entry file E2, and a property entry file E1. The index file comprises the entry files E1 through E3 and by a resource file (not shown) composed of management information about these files E1 through E3.

The entry files E1 through E3 are headed by headers PH, THH, and TXH respectively. The headers are each followed by a series of entries made of fixed-length slots.

The text entry file E3 comprises a series of entries composed of slots comprising assigned text data representative of title character strings indicating the titles of the files to be managed. The thumbnail image entry file E2 is formed by a series of entries made up of slots comprising assigned thumbnail images (still pictures) representative of the content of the files to be managed.

The text entry file E3 and thumbnail image entry file E2 have each of their slots formed in a fixed length. Depending on the amount of the extract information derived from the files to be managed, one or a plurality of slots are assigned to each file subject to management. Because extract information differs in type depending on the type of the file to be managed, there may or may not be assigned an entry to a given file of interest.

Meanwhile, the property entry file E1 is formed by a series of slots comprising, along with entry management information, the extract information in binary form set for assigned data representative of the disk titles and attributes regarding the files to be managed. As with the text entry file E3 and thumbnail image entry file E2, the property entry file E1 has its slots formed in a fixed length each. The property entry file E1 is always set regardless of the type of the files to be managed. In the property entry file E1, the entries of the files subject to management are arranged to correspond with the entries in the text entry file E3 and thumbnail image entry file E2.

Where there is no entry in the text entry file E3 or in the thumbnail image entry file E2, in the property entry file E1, extract information about each subject file to be managed is assigned to one or a plurality of slots depending on the amount of the extract information, therefore. On the other hand, if a plurality of entries are set illustratively for one subject file to be managed in the text entry file E3 and/or in the thumbnail image entry file E2, then, independently of the amount of the extract information, entries are provided for the subject file according to at least that plurality of entries. In the index file, the real data comprises fixed-length slots so as to reduce the wasteful use of the recording medium as well as to lower the frequency of accessing the recording so that processing time may be reduced.

In the property entry file E1, each entry is provided with management information specifying relations to the corresponding entries in the other entry files (as indicated by arrows in Fig. 2). With regard to an entry spanning a plurality of slots, there is provided management information for an extended slot specifying the continuous entries. In this manner, by using the management information which is set in the property entry file E1 and which specifies the relations to the corresponding entries in the other entry files, the index file designates a plurality of slots that record the extract information about each subject file to be managed. Also in the property entry file E1, there is provided information for identifying the subject files which are subject to management and, by using the information, the subject files corresponding to the extract information recorded in the index file is identified.

In the property entry file E1, there is also provided "valid-invalid" information as part of the management information indicating whether the extract information set in each entry is valid or invalid. In the index file, simply invalidating the valid-invalid information about selected property entries in the property entry file E1 concurrently invalidates the corresponding entries in the other entry files E2 and E3, whereby the corresponding files subject to management are deleted from the index file.

In the index file, it is possible to register in each of the entry files not only real files that exist on the recording medium but also real or virtual folders for use by the file management system for the recording medium. The property entries with such folders registered therein may be defined hierarchically. That is, the index file permits management of the files recorded on the optical disk 2 through the use of an actually existing hierarchical structure of the folders set on the optical disk 2 or by means of a virtually set hierarchical structure of the folders set in the index file.

Meanwhile, such management information as the starting locations of the slots in each of the entry files is recorded in the resource file illustratively along with the attribute information about the index file.

The index file thus structured provides the user with thumbnail images from the thumbnail image entry file E2 or with file titles from the text entry file E3. When the user selects one of the files based on the thumbnail images and titles, the selected file is detected by the file management system referencing the file name based on the description in the corresponding property entry, which makes it possible to improve the user's ease of operation in handling files.

In the optical disk apparatus 1, as described, the system control microcomputer 19 first acquires video and audio data in compressed form through the file generator 15, then decodes the acquired data. The video data is thinned out to generate thumbnail images which in turn are used to generate the thumbnail image entry file E2. Title data is generated from the user's settings as well as from the file information retained by the file management system for the optical disk 2 regarding the files subject to management. The title data thus generated is used to form the text entry file E3. The property entry file E1 is generated in response to the user's operations. Finally, the resource file is formed in a manner reflecting the entry files E1 through E3.

### (1-3) Processing by the system control microcomputer

During management using the index file, recording one file to the optical disk 2 consumes one slot at least in the property entry file E1. That means recording a large number of still picture files to the optical disk 2 inordinately increases the number of property entries. The same applies to the thumbnail image entry file E2 in which the entry count can increase untenably.

The excessive increase in the number of entries is bypassed by the system control microcomputer 19 organizing the index file under instructions from the user. That is, the index file is reorganized in such a manner as to reduce the number of entries registered therein.

More specifically, a plurality of still picture files currently registered in the index file are organized into one file. This file is prepared as a movie file comprising a sequence of still pictures representative of the still picture files. The registration of these still picture files is deleted from the index file, and the newly formed movie file is registered into the index file. The movie-file is formed in the QT file format so that the real data in the corresponding entries of the thumbnail image entry file E2 and text entry file E3 is also registered in the movie file. This arrangement ensures the ease of operation as if these multiple files were actually registered in the index file.

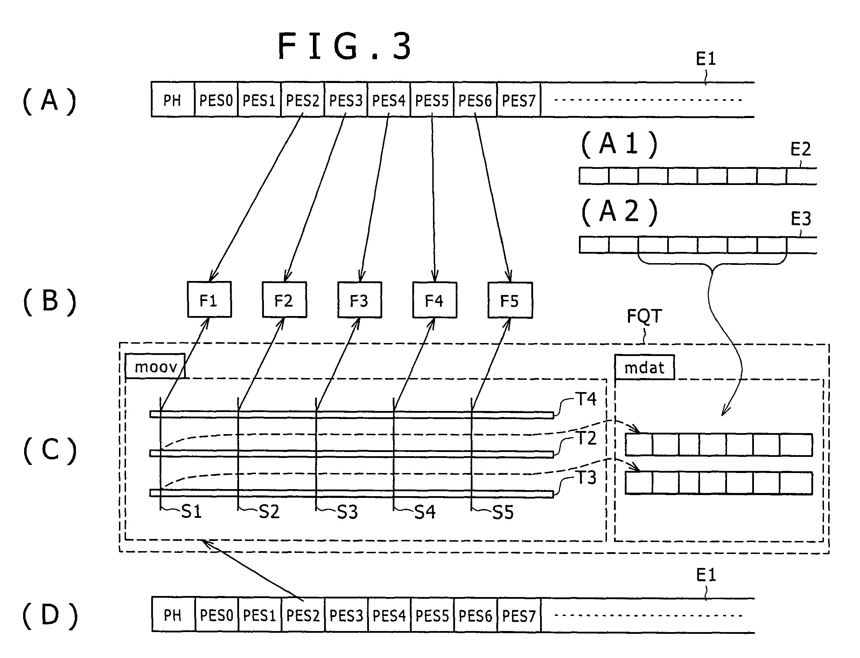

As shown in reference to Fig. 3, when still picture files of imaging results are to be simply registered, the still picture files F1 through F5 are recorded to the optical disk 2. Furthermore, property entry files PES2 through PES6 corresponding to the still picture files F1 through F5 are set in the property entry file E1 in the index file so that the property entries PES2 through PES6 point to the still picture files F1 through F5 respectively as indicated by arrows in the figures (Figs. 3 (A) and (B)).

A QT format file (Fig. 3 (C)) is formed using a hierarchical structure called an atom comprising real data such as movies, still pictures and sounds as well as by management information for managing the real data. In the files in a QT folder, their organized real data are assigned to a movie data atom (mdat), while the organized management information for managing the real data of the movie data atom is allocated to a movie atom (moov). The real data is classified by attribute into groups that include the management information for managing the real data. The management information in the groups is organized into tracks. In the example of Fig. 3 (C), the movie atom has three tracks: a till picture track T4 for managing the real data comprising still pictures, a thumbnail track T2 for managing the real data making up thumbnail images, and a title track T3 for managing the real data forming titles in text data.

In the QT format, it is possible to set a subject to be managed in external reference form in an external file by using the tracks T2 through T4 as well as a subject to be managed in self-contained form in the real data of the movie data atom (mdat) as a QT format file. With this embodiment, a plurality of still picture files in external reference form are organized into one movie file. Thumbnail image entries and text entries are formed into a movie file in self-contained form. In this context, the external reference form is a QT file format in which the movie data atom (mdat) of some other QT file is set as real data; the self-contained form is a QT file format in which real data and a movie atom (moov) are integrated. A QT file in external reference form having a movie atom (moov) only is called a resource file.

The system control microcomputer 19 forms a movie atom so that samples S1 through S5 on the still picture track T4 point to the multiple still picture files F1 through F5. The still picture files F1 through F5 are thus arranged into a movie file FQT. From the corresponding thumbnail image entry file E2 and text entry file E3, the system control microcomputer 19 copies thumbnail image data and title data and records what is copied into the movie data atom of the movie file FQT.

In those property entries PES2 through PES6 in the property entry file E1 which point to the still picture files F1 through F5 respectively, the "valid-invalid" information is set for invalidation. This deletes the registration of the still picture files F1 through F5 from the entry files E1 through E3 in the index file. Extract information derived from the movie file FQT is registered into the property entries thus invalidated (Fig. 3 (D)), whereby the movie file FQT is registered in the index file.

In the manner described above, the system control microcomputer 19 organizes a plurality of entries representing a plurality of still picture files into a single entry and reduces the number of entries in the entry files involved, therefore. In the thumbnail image entry file E2 and text entry file E3 associated with the movie file FQT, the system control microcomputer 19 illustratively registers thumbnail images and folder names in conjunction with these multiple still picture files.

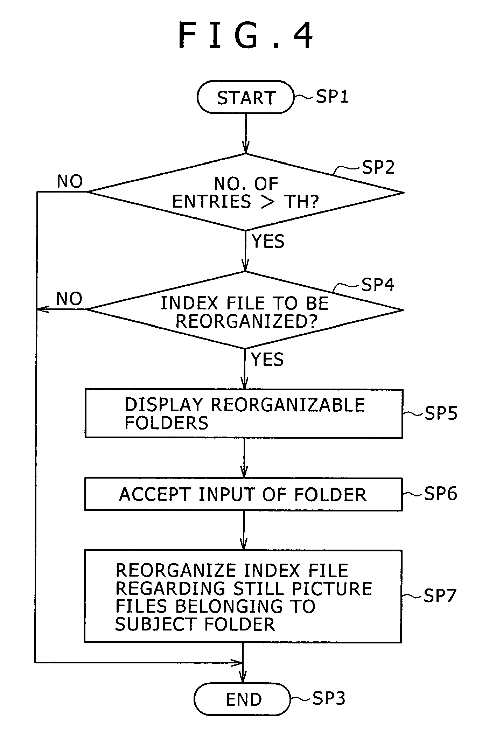

Fig. 4 is a flowchart of steps constituting a typical procedure performed by the system control microcomputer 19 in reorganizing the index file. The system control microcomputer 19 carries out this procedure illustratively upon power-up or upon loading of the optical disk 2 or upon completion of the recording of imaging results. With the procedure started, the system control microcomputer 19 goes from step SP1 to step SP2. In step SP2, the system control microcomputer 19 detects the number of entries in the property entry file E1 and checks to determine whether the entry count is higher than a predetermined threshold TH. The threshold TH is set beforehand in consideration of the number of processible entries in the index file for the apparatus in use. If the result of the check in step SP2 is negative, that means the index file still has a sufficient number of free slots. In that case, the system control microcomputer 19 goes from step SP2 to step SP3 and terminates the procedure.

If the result of the check in step SP2 is affirmative, then the system control microcomputer 19 goes from step SP2 to step SP4. In step SP4, the system control microcomputer 19 causes a predetermined menu screen to appear and accepts through the menu screen the user's choice between reorganizing and not reorganizing the index file. If the choice is made on the menu not to reorganize the index file, then the system control microcomputer 19 goes from step SP4 to step SP3 and terminates the procedure.

If the choice is made on the menu to reorganize the index file, the system control microcomputer 19 goes from step SP4 to step SP5 and displays reorganizable folders. With the reorganizable folders displayed, the system control microcomputer 19 accepts in step SP6 the user's input of the folder desired to be reorganized. In step SP7, the system control microcomputer 19 reorganizes the index file regarding the still picture files that belong to the user-designated folder. Using the management information in the hierarchical structure set for the property entry file E1 in the index file, the system control microcomputer 19 successively selects the property entries associated with the files selected by the user. The registration of the still picture files represented by the property entries is deleted from the index file following creation of the movie file FQT discussed above in reference to Fig. 3. The movie file FQT is registered into the property entry file E1, whereby the index file is reorganized. Thereafter, the system control microcomputer 19 goes to step SP3 and terminates the procedure.

With this embodiment, as described, when the number of entries registered in the index file approaches an upper limit that is processible, the still picture files that belong to the user-designated single folder are organized into a movie file. The index file is thus rearranged so that the number of entries therein is reduced.

Given the user's instruction to display a list of the files recorded on the optical disk 2, the system control microcomputer 19 hierarchically displays the real and virtual folders set in the index file. When the user selects any one of the displayed folders, the system control microcomputer 19 displays the files that belong to the user-selected folder. If the user designates a file display that lists thumbnail images, the system control microcomputer 19 displays a list of the files belonging to the user-selected folder by use of the thumbnail images registered in the index file. If the user designates a file display that lists titles, the system control microcomputer 19 displays a list of the titles of the folders belonging to the user-selected folder through the use of the text data registered in the text entry file of the index file.

If the folder selected by the user is a folder that holds still picture files in a single movie file as a result of the reorganization of the index file, the system control microcomputer 19 starts up the application for dealing with QT movie files. When the user designates the list of thumbnail image display, the system control microcomputer 19 causes the application to display the thumbnail images in list form following their successive retrieval from the movie data atom in keeping with what is recorded on the thumbnail track T2 of the movie file FQT. If the user designates the list of title display, the system control microcomputer 19 likewise causes the application to display the titles in list form using the text data in the movie data atom in accordance with what is recorded on the title track T3 of the movie file FQT.

If the user selects any one of the files from the file list being displayed and if the selected file is found registered in the index file, the system control microcomputer 19 instructs the file management system of the optical disk apparatus 1 to reproduce the file through the use of the management information in the corresponding property entry. The file of interest is reproduced from the optical disk 2 and presented to the user. If the user-selected file is one of the still picture files organized into the movie file, the system control microcomputer 19 detects the file in question by use of the management information recorded on the still picture track T4 and reproduces the external reference file in the QT movie file so as to reproduce the corresponding file from the optical disk 2 for presentation to the user.

If the user designates deletion of one of the still picture files organized in the movie file, the system control microcomputer 19 deletes the still picture of the still picture file in question from the QT movie file FQT using the settings of the still picture track T4, thumbnail track T2, and title track T3 in the movie atom of the QT movie file FQT. At the same time, the system control microcomputer 19 causes the file management system to delete the still picture file from the optical disk 2.

As described, even after reducing the number of entries by reorganizing a plurality of still picture files into a single movie file, the optical disk apparatus 1 still ensures the same ease of operation as when the still picture files are directly registered in the index file.

Suppose now that the user designates reregistration into the index file of the still picture files organized into the movie file FQT. In that case, as opposed to the process of reorganizing the index file, system control microcomputer 19 deletes the entry of the movie file FQT from the index file. At the same time, extract information about the still picture files is registered into the property entry file E1 of the index file in such a manner that the information points to the still picture files as designated consecutively by the still picture track T4 of the movie file FQT. Furthermore, the corresponding thumbnail images and text data are reproduced successively from the movie file FQT in keeping with what is recorded on the thumbnail track T2 and title track T3 of the movie file FQT and are registered into the thumbnail image entry file E2 and text entry file E3. The management information in the property entries is set in a manner reflecting the restored registration. Following the registration of the still picture files in the index file, the movie file is deleted from the optical disk 2.

As described, where the optical disk 2 is loaded into and used by equipment that utilizes an application incapable of processing still picture files arranged in a movie file, the optical disk apparatus 1 reregisters the individual still pictures into the index file so that the equipment may handle the still picture files recorded on the optical disk 2.

### (2) Operation of the embodiment

In operation, the optical disk apparatus 1 structured as described above (Fig. 1) acquires video and audio data constituting still pictures or movies by use of the imaging means and audio acquiring means, gets the video and audio data encoded by the video encoder 11 and audio encoder 12 respectively, converts the encoded data into a data stream of a QT movie file through the file generator 15, and records the data stream to the optical disk 2 via a recording section made up of the memory controller 18, error correcting encoder/decoder 21, data modem 23, magnetic field modulation driver 24, and optical pickup 33. The optical disk apparatus 1 thus records still pictures or movies of the imaging result to the optical disk 2 in the form of a QT movie file. In keeping with recording the file records on the optical disk 2, the system control microcomputer 19 outputs its data to the recording section of the optical disk apparatus 1 so that the management information for the file management system of the optical disk 2 is updated to reflect what is recorded in the QT movie file.

The QT movie file thus recorded is subsequently reproduced through the optical pickup 33, data modem 23, error correcting encoder/decoder 21, and memory controller 18 on the basis of the management information under the file management system. The reproduced file data is demultiplexed by the file decoder 16 into elementary streams of video and audio data which in turn are decoded by the video decoder 13 and audio decoder 14 for output.

Upon recording of the QT movie file by the optical disk apparatus 1, the system control microcomputer 19 acquires thumbnail image data using the file generator 15. Before or after the recording of the file, the system control microcomputer 19 acquires title data through the user's input or by some other means. Also acquired is information representative of a file name or the like for use by the file management system. From the data and information thus obtained, the system control microcomputer 19 derives extract information about the QT movie file to be recorded to the optical disk 2. The optical disk apparatus 1 generates an index file based on the extract information thus acquired in the internal memory of the system control microcomputer 19 as in the case of the management information for the file management system of the optical disk 2. The generated index file is recorded to the optical disk 2 in the same manner as QT files. The management information for the file management system is updated to reflect what is newly recorded in the index file.

As described, the optical disk apparatus 1 presents the user with various files recorded on the optical disk 2 by displaying thumbnail images or titles registered in the index file, and accepts the selection of any one of the files by the user. Where a large number of files are recorded on the optical disk 2, the optical disk apparatus 1 allows the user to select any desired files dependably and without difficulty and thereby improves the user's ease of operation.

Of these recorded files, the movie files of imaging results have each a relatively large quantity of data. As a result, the slots prepared beforehand in the index file are considered sufficient to accommodate the many, but not unduly numerous, movie files recorded on the optical disk 2 for their successive registration into the index file.

On the other hand, the still picture files of imaging results tend to have an appreciably smaller quantity of data each than the movie files. Where numerous still picture files are recorded, the number of entries in the index file can become so large that the index file cannot accommodate all the still picture files. That is, there may well be a free space on the optical disk 2 which remains available but will not be used for recording more still picture files because of the exhausted index file.

That bottleneck is circumvented by this embodiment that causes the system control microcomputer 19 to reorganize the index file so as to reduce its entry count. More specifically, when the user gives an instruction to reorganize the index file, the optical disk apparatus 1 forms a QT movie file FQT (see Fig. 3) by setting the still picture track T4 in a manner pointing, in the external reference form, to a plurality of still picture files contained in the user-designated folder. The optical disk apparatus 1 thus organizes the plurality of still picture files into one movie file.

Thereafter the optical disk apparatus 1 deletes from the index file those entries that correspond to the multiple still picture files organized into the single movie file, and registers an entry composed of extract information about the movie file into the index file. That is, the optical disk apparatus 1 replaces the multiple entries representing the multiple still picture files with just one entry for the movie file in the index file. In this manner, even where numerous still picture files are to be managed, an inordinate increase of the number of entries in the index file can be prevented.

The optical disk apparatus 1 thus generates a move file comprising a plurality of still picture files in the external reference form. The optical disk apparatus 1 need only form the still picture track T4 for the movie file in such a manner as to point to the still picture files recorded on the optical disk 2 in accordance with what is currently recorded in the property entry file E1 of the index file. This arrangement simplifies the process of organizing the multiple still pictures into one movie file.

The real data making up the thumbnail track and title track of the movie file is set after being acquired from the corresponding thumbnail image entries and text entries in the entry files. This makes it possible to present the user with the still picture files organized into the movie data using the thumbnail images and titles. Following the presentation, the user's selection is accepted. It is thus possible to ensure the same ease of operation as when still picture files are directly registered in the index file.

In the optical disk apparatus 1, the process of reorganizing the index file is carried out by the system control microcomputer 19 counting the number of entries so that the entry count is held under a predetermined number. Where the optical disk 2 is to be processed by an apparatus with an insufficient capability to deal with a large number of entries, the optical disk apparatus 1 allows such an apparatus to process reliably the numerous files recorded on the optical disk 2 under management with the index file.

Prior to the above processing, the user is prompted to give confirmation so as to effectively avoid the situation where the files recorded by the user on the optical disk 2 through reorganization of the index file cannot be manipulated. This further enhances the ease of operation for the user.

The still picture files that are processed as described using the index file may be handled in increments of the user-designated folder comprising the still picture files, by use of either the application for the index file or the application for QT movie files, the two applications being switched as needed. The files may be displayed in list form using thumbnail images or may be reproduced individually. The optical disk apparatus 1 thus offers a user interface equivalent to an operation of the index file for organizing a plurality of still picture files into a single movie file. By offering such a user interface, the optical disk apparatus 1 simplifies its processing from the user's point of view.

It might happen that the user gives an instruction to reregister to the index file the still picture files organized into one movie file. In that case, the process of index file reorganization is reversed so that the still picture files held in the single movie file are registered individually back into the index file. Therefore, if the optical disk 2 is to be used by an apparatus incapable of handling movie files each comprising a plurality of still picture files, the optical disk apparatus 1 allows such apparatus to handle individual still picture files without difficulty. This feature enhances the general versatility of the optical disk 2.

### (3) Effects of the embodiment

The embodiment structured as described above allows a plurality of still picture files to be organized into a single movie file that is then registered anew in the index file comprising a series of entries composed of file extract information. This makes it possible to prevent an inordinate increase of the number of entries in the index file where a large number of still picture files are to be managed.

Since the movie file thus generated is an external reference type file that offers corresponding still pictures by referring to the multiple still picture files recorded on the recording medium, the process of organizing a plurality of still picture files into a single movie file is simplified.

Thumbnail images are acquired from the index file and are associated with the still picture files so that real data groups formed by the thumbnail images are generated in the movie file. And, title data is obtained from the index file and is associated with the still picture files so that real data groups composed of the title data are generated in the movie file. This arrangement allows the multiple still picture files contained in one movie file to be managed by use of thumbnail images and titles. That ensures the same ease of operation as when still picture files are registered individually in the index file.

When a plurality of still picture files reorganized into one movie file are arranged to belong specific folders, it is possible to switch processing every folder so as to simplify the processing involved.

The number of entries in the index file is determined and the determination result thus obtained is used as a basis for executing reorganization of the index file. This makes it possible to keep the number of entries in the index file within a predetermined range.

The number of entries in the index file is also determined and the determination result is presented to the user to solicit instructions for reorganizing the index file. This improves the ease of operation for the user.

The still picture files reorganized in a movie file are reregistered as needed into the index file. That is, the entry comprising the extract information about the movie file is deleted from the index file, while the entries comprising the extract information about the multiple still picture files contained in the movie file are registered individually into the index file. In this manner, a plurality of still picture files organized into a movie file are reregistered individually back into the index file whenever necessary.

### (4) Second embodiment

The second embodiment involves forming a movie file comprising a plurality of still picture files in the so-called self-contained form. The second embodiment is structurally the same as the optical disk apparatus practiced as the first embodiment except for the different movie file type. For this reason, the ensuing explanation will be made in reference to the structure shown in Fig. 1.

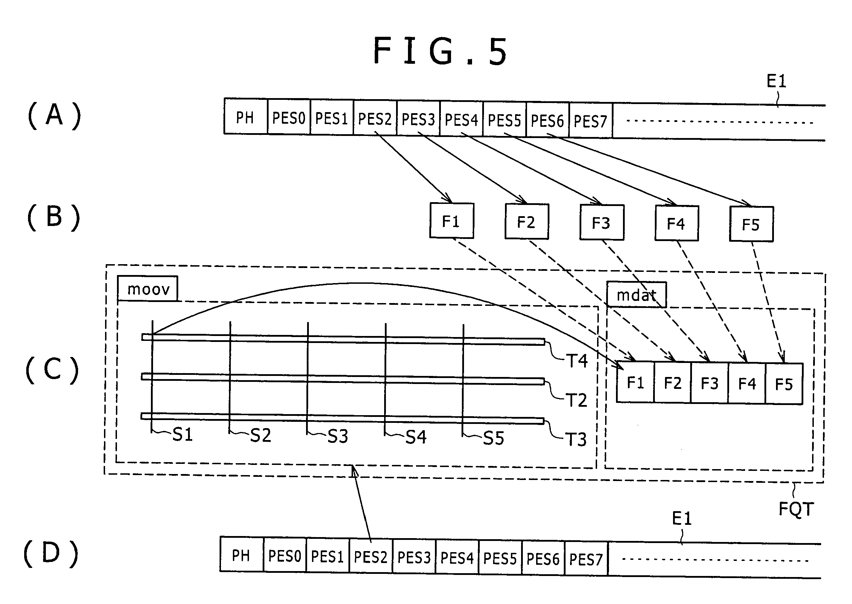

Fig. 5 is furnished in contrast to Fig. 3 with regard to the second embodiment. As illustrated, the system control microcomputer 19 of the second embodiment copies data from the still picture files to be organized in the index file, and records the copied data successively to a movie data atom (Figs. 5 (A), (B) and (C)). This sets a still picture track T4 of a movie atom in such a manner as to point to the data comprising the still picture files. When the movie file is thus formed and recorded to the optical disk 2, the corresponding still picture files are deleted from the optical disk 2.

In keeping with the erasure of the still picture files, the corresponding entries in the index file are deleted. In response to recording the movie file, its entry is registered into the index file. As with the first embodiment, the second embodiment performs the processing of thumbnail image entries and text entries by copying the corresponding data to the movie data atom.

Given the user's instruction to reproduce the still picture files contained in a movie file, the system control microcomputer 19 of the second embodiment presents the user with the still picture file data set in the corresponding movie data atom by movie-atom recording.

If the user gives an instruction to reregister the still picture files in the movie file, the system control microcomputer 19 records to the optical disk 2 the data comprising the individual still picture files recorded in the movie data atom in the self-contained form. And, in keeping with recording the data, the system control microcomputer 19 registers corresponding property entries, thumbnail image entries, and text entries into the index file. In this manner, the still picture files of interest are individually registered back to the index file.

As described, the second embodiment organizes a plurality of still picture files into a movie file in the self-contained form and thereby provides the same effect as the first embodiment. Integrating multiple still picture files in the self-contained form also reduces the number of real files under the file management system.

### (5) Other variations

The first and the second embodiments above were shown to organize a plurality of still picture files into one QT movie file. However, this is not limitative of the present invention. Alternatively, multiple still picture files may be organized into a move file of diverse formats.

Where the number of entries in the index file was found to exceed a predetermined threshold, the above-described embodiments were shown executing reorganization of the index file under instructions from the user. However, this is not limitative of the present invention, and a variation of timing of executing reorganization of the index file may be arranged if needed, i.e., when the number of entries in the index file exceeds a predetermined threshold, the index file is reorganized automatically regardless of the user's instructions.

The embodiments above were shown to make up the index file by integrally holding, in the QT file structure, data groups of extract information and management data groups for managing these data groups. Alternatively, any one of various formats may be adopted in forming the index file.

In the foregoing description, the present invention was shown applied to the optical disk apparatus for recording imaging results as well as output from the personal computer. Alternatively, the present invention can be applied extensively to cases where numerous files recorded on various recording media such has magneto-optical disks and hard disk drives are managed or where a large number of files held in a particular server are managed.

Furthermore, the embodiments above were shown recording the index file on the same recording medium together with the file being managed. Alternatively, the index file may be recorded on a recording medium different from that on which to record the files subject to management. As another alternative, the index file may be held in a server different from that which retains the subject files being managed.

### Industrial Applicability

The present invention applies illustratively to an optical disk apparatus.

## Claims

1. A file managing apparatus for managing files recorded on a recording medium which has an index file recorded as a series of entries comprising blocks of extract information derived from and corresponding to said files;
wherein said file managing apparatus reorganizes said index file in such a manner that a plurality of still picture files recorded on said recording medium are grouped into a single movie file; and
wherein the entries corresponding to said plurality of still picture files grouped into said movie file are deleted from said index file, while an entry comprising extract information about said movie file is registered into said index file.

2. The file managing apparatus according to claim 1, wherein said movie file is an external reference type file which offers the corresponding still pictures in reference to said plurality of still picture files recorded on said recording medium; and
wherein said file managing apparatus forms said movie file so that said movie file points to said plurality of still picture files.

3. The file managing apparatus according to claim 1, wherein said movie file is a self-contained type file which has real data representative of picture data related to said plurality of still picture files and which offers the corresponding still pictures based on said real data;
wherein said file managing apparatus forms said movie file by successively acquiring said picture data from said plurality of still picture files; and
wherein, upon deleting from said index file the entries corresponding to said plurality of still picture files grouped into said movie file, said file managing apparatus also deletes said plurality of still picture files.

4. The file managing apparatus according to claim 2, wherein said extract information is organized into groups by attribute of said extract information so that entries of thumbnail images representative of said still picture files are formed in said index file;
wherein said file managing apparatus acquires data about said thumbnail images representative of said plurality of still picture files from said index file and associates the acquired data with said still picture files so as to form groups of real data comprising the data about said thumbnail images in said movie file; and
wherein said file managing apparatus deletes the entries of said thumbnail images representative of said still picture files recorded in said index file.

5. The file managing apparatus according to claim 3, wherein said extract information is organized into groups by attribute of said extract information so that entries of thumbnail images representative of said still picture files are formed in said index file;
wherein said file managing apparatus acquires data about said thumbnail images representative of said plurality of still picture files from said index file and associates the acquired data with the picture data so as to form groups of real data comprising a series of the data about said thumbnail images in said movie file; and
wherein said file managing apparatus deletes the entries of said thumbnail images representative of said still picture files recorded in said index file.

6. The file managing apparatus according to claim 2, wherein said extract information is organized into groups by attribute of said extract information so that entries in text of titles representative of said still picture files are formed in said index file;
wherein said file managing apparatus acquires data about said titles representative of said plurality of still picture files from said index file and associates the acquired data with said still picture files so as to form groups of real data comprising the data about said titles in said movie file; and
wherein said file managing apparatus deletes the entries of said titles representative of said still picture files recorded in said index file.

7. The file managing apparatus according to claim 3, wherein said extract information is organized into groups by attribute of said extract information so that entries in text of titles representative of said still picture files are formed in said index file;
wherein said file managing apparatus acquires data about said titles representative of said plurality of still picture files from said index file and associates the acquired data with the picture data so as to form groups of real data comprising the data about said titles in said movie file; and
wherein said file managing apparatus deletes the entries of said titles representative of said still picture files recorded in said index file.

8. The file managing apparatus according to claim 1, wherein said plurality of still picture files associated with the reorganization of said index file belong to a particular folder.

9. The file managing apparatus according to claim 1, wherein the number of entries in said index file is determined and said index file is reorganized based on the determination result.

10. The file managing apparatus according to claim 1, wherein the number of entries determined in said index file is presented to a user and said index file is reorganized in response to user instruction.

11. The file managing apparatus according to claim 1, wherein reregistration of said still picture files is carried out in such a manner that the entry comprising the extract information about said movie file is deleted from said index file while the entries comprising the extract information about said plurality of still picture files are registered into said index file.

12. A file managing method for managing files recorded on a recording medium which has an index file recorded as a series of entries comprising blocks of extract information derived from and corresponding to said files, said file managing method comprising the steps of:
reorganizing said index file in such a manner that a plurality of still picture files recorded on said recording medium are grouped into a single movie file; and
deleting the entries corresponding to said plurality of still picture files grouped into said movie file from said index file, while registering an entry comprising extract information about said movie file into said index file.

13. A file managing method program for causing a computer to execute a procedure for managing files recorded on a recording medium which has an index file recorded as a series of entries comprising blocks of extract information derived from and corresponding to said files, said procedure comprising the steps of:
reorganizing said index file in such a manner that a plurality of still picture files recorded on said recording medium are grouped into a single movie file; and
deleting the entries corresponding to said plurality of still picture files grouped into said movie file from said index file, while registering an entry comprising extract information about said movie file into said index file.

14. A recording medium which records a file managing method program for causing a computer to execute a procedure for managing files recorded on a recording medium which has an index file recorded as a series of entries comprising blocks of extract information derived from and corresponding to said files, said procedure comprising the steps of:
reorganizing said index file in such a manner that a plurality of still picture files recorded on said recording medium are grouped into a single movie file; and
deleting the entries corresponding to said plurality of still picture files grouped into said movie file from said index file, while registering an entry comprising extract information about said movie file into said index file.
